# EUROPEAN PATENT APPLICATION

(11) **EP 2 827 564 A1**
(43) Date of publication of application: **21.01.2015**
(21) Application number: 12871037.3
(22) Date of filing: 12.12.2012
(51) Int. Cl.: H04M 1/02, H05K 5/02

(54) **PORTABLE TERMINAL DEVICE**

(30) Priority: 12.03.2012 JP 2012054246
(71) Applicant: NEC Corporation, Tokyo 108-8001 (JP); NTT DOCOMO, INC., Chiyoda-ku Tokyo 100-6150 (JP)
(72) Inventor: SHIRAISHI, Mitsutaka, Kanagawa 211-8666 (JP)
(74) Representative: Vossius & Partner
(86) International application number: PCT/JP2012/007935
(87) International publication number: WO 2013/136397

(57) **Abstract**

A portable terminal device (1) according to the present invention includes: a housing (11) comprising a concave portion (21) in which predetermined components are housed, and a mounting surface (22) that is disposed on a top surface of a side wall arranged around the concave portion (21); a fixing component (12) that is fixed to the mounting surface (22) of the housing (11) and comprises a mounting surface (23) and a protruding portion (24) that is arranged around outside of the mounting surface (23); and a display section (13) that is fixed to the mounting surface (23) at an inner side of the protruding portion (24) of the fixing component (12). Further, a rigidity of the fixing component (12) is lower than a rigidity of the housing (11) and the display section (13).

## Description

### Technical Field

The present invention relates to a portable terminal device, in particular, a portable terminal device using a thin planar housing.

### Background Art

In recent years, portable terminal devices such as mobile phones and smart phones have become widespread. In general, portable terminal devices are often carried around for use by users. When a user, for example, accidentally drops a portable terminal device, a strong impact is exerted on the portable terminal device.

Patent Literature 1 discloses a technique for a liquid crystal device capable of preventing deterioration of the orientation property and the image quality of the liquid crystal panel even when a strong impact is exerted on the liquid crystal device. In the liquid crystal device disclosed in Patent Literature 1, a vibration impact resistance unit in which two impact absorbing spaces are disposed on both sides of a liquid crystal panel for preventing an impact exerted on a liquid crystal main body from being transmitted to the liquid crystal panel is fixed to a fixing component. Then, by fixing this fixing component to which the vibration impact resistance unit is fixed to a first exterior component that forms the outer surface of the liquid crystal device main body, the vibration impact resistance unit is indirectly fixed to the first exterior component in order to prevent a strong impact exerted on the liquid crystal device main body from being transmitted to the liquid crystal panel.

Patent Literature 2 discloses a technique for a portable terminal device capable of thinning a front casing.

### Citation List

### Patent Literature

Patent literature 1: Japanese Unexamined Patent Application Publication No. H10-90656
Patent literature 2: Japanese Unexamined Patent Application Publication No. 2001-296816

### Summary of Invention

### Technical Problem

In recent years, portable terminal devices such as mobile phones and smart phones have been becoming thinner and thinner. However, as portable terminal devices become thinner, the strength of the portable terminal devices is lowered and hence the impact resistance thereof is lowered.

In view of the above-described problem, an object of the present invention is to provide a portable terminal device capable of achieving a reduction in the thickness and an improvement in the impact resistance of the portable terminal device.

### Solution to Problem

A portable terminal device according to an aspect of the present invention includes: a housing comprises a concave portion in which predetermined components are housed, and a first mounting surface that is disposed on a top surface of a side wall arranged around the concave portion; a fixing component that is fixed to the first mounting surface of the housing and comprises a second mounting surface and a first protruding portion that is arranged around outside of the second mounting surface; and a display section that is fixed to the second mounting surface at an inner side of the first protruding portion of the fixing component; wherein a rigidity of the fixing component is lower than a rigidity of the housing and the display section.

### Advantageous Effects of Invention

According to the present invention, it is possible to provide a portable terminal device capable of achieving a reduction in the thickness and an improvement in the impact resistance of the portable terminal device.

### Brief Description of Drawings

Fig. 1 is an exploded perspective view showing an example of a portable terminal device according to an exemplary embodiment;
Fig. 2 is a cross section of the portable terminal device taken along a line II-II in Fig. 1;
Fig. 3 is a cross section showing another example of the portable terminal device according to the exemplary embodiment;
Fig. 4 is a top view showing a state where a frame component is fixed to a housing of the portable terminal device;
Fig. 5 is a top view showing a state where a frame component and a fixing component are fixed to the housing of the portable terminal device; and
Fig. 6 is a top view showing a state where a display section is fixed to the housing of the portable terminal device.

### Description of Embodiments

Exemplary embodiments according to the present invention are explained hereinafter with reference to the drawings.

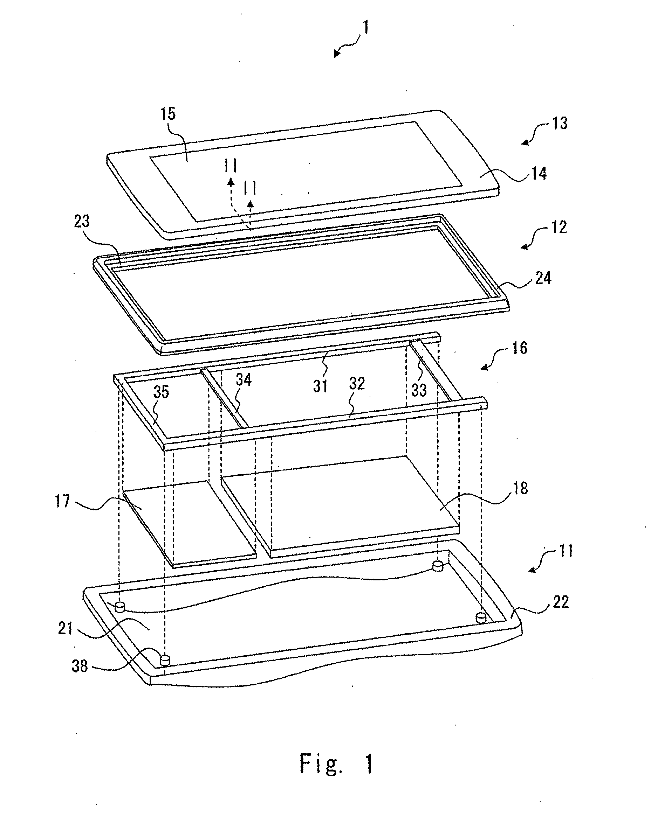

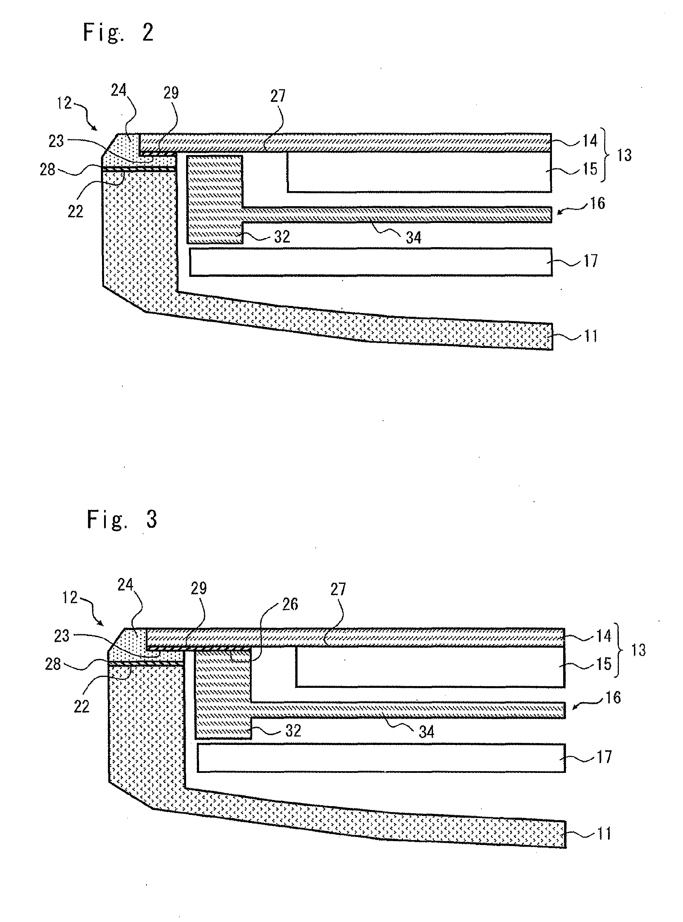

Fig. 1 is an exploded perspective view showing an example of a portable terminal device 1 according to this exemplary embodiment. Fig. 2 is a cross section of the portable terminal device 1 taken along a line II-II in Fig. 1. In the portable terminal device 1 according to this exemplary embodiment, a substrate 17, a battery 18, and a frame component 16 are housed in a space that is formed by joining a housing 11 and a display section 13 via a fixing component 12. The portable terminal device 1 according to this exemplary embodiment may be, for example, a smart phone, a tablet-type portable terminal device, a mobile phone, a game machine, an electronic book reader, or the like.

The substrate 17 and the battery 18 are fixed to the frame component 16 by using screws or the like. For example, the substrate 17 and the battery 18 are fixed to the frame component 16 from the housing 10 side. The frame component 16, to which the substrate 17 and the battery 18 are fixed, is fixed to fixing portions 38 that are arranged at corners of a concave portion 21 of the housing 11 by using screws or the like. The frame component 16 includes outer frames 31, 32, 35 and beam members 33 and 34 that connect the outer frames 31 and 32. A thickness of the material configuring the outer frames 31, 32, 35, for example, is thicker than that of the material configuring the beam members 33 and 34 (refer to Fig. 2).

Circuit components are disposed on the substrate 17. Note that examples of the circuit components include an integrated circuit device such as a processor, a memory, and a communication module, which are used for driving the portable terminal device, and an image pickup device for a camera. The battery 18 is, for example, a lithium-ion secondary battery.

The frame component 16 is a component for holding the substrate 17 and the battery 18. Since the frame component 16 needs to have a certain strength, the frame component 16 is preferably formed of a metal material. Examples of the material for the frame component 16 include magnesium alloys, aluminum, and stainless steel. Note that to reduce the weight of the portable terminal device 1, the frame component 16 is preferably formed by using a magnesium alloy. Alternatively, the frame component 16 may be formed by using a resin material, provided that the certain strength is ensured.

The housing 11 includes the concave portion 21 in which predetermined components (i.e., the frame component 16, the substrate 17, the battery 18, and the like) are housed, and a mounting surface 22 (a first mounting surface) that is disposed on a top surface of a side wall arranged around the concave portion 21. Further, the fixing portions 38 to which the frame component 16 is fixed are arranged at the corners of the concave portion 21 of the housing 11. Note that, the rear surface of the housing 11 shown in Fig. 1 is formed so as to have a curved line(s) so that the portable terminal device fits a user's hand. Alternatively, the rear surface of the housing 11 may be formed as a flat surface.

It is preferable that the housing 11 be formed by using a rigid material to maintain the strength of the portable terminal device 1. For example, the housing 11 can be formed of a carbon composite material (CFRP: Carbon Fibers Reinforced Plastics). The carbon composite material is a composite material in which the amount of carbon contained therein is 50% (v/v) or greater, and contains an inorganic binder such as silica and alumina, fibers, and so on. The carbon composite material has both a high strength and a light weight. Alternatively, the housing 11 may be formed by using a metal material such as aluminum, aluminum alloys, magnesium alloys, or the like.

The fixing component 12 is arranged between the mounting surface 22 of the housing 11 and a bottom surface 27 of the display section 13. Further, the fixing component 12 is formed in a frame-shape and is arranged at a place corresponding to the mounting surface 22 of the housing 11. The fixing component 12 is fixed to the mounting surface 22 of the housing 11 by using an adhesive component 28. Further, the fixing component 12 includes a mounting surface 23 (a second mounting surface) arranged at an inner side of the fixing component 12 and a protruding portion 24 (a first protruding portion) arranged around outside of the mounting surface 23. Here, the mounting surface 23 is arranged so as to be more close to the display section 13 compared with the mounting surface 22 in a normal direction of a main surface of the display section 13. Further, the mounting surface 23 is arranged so as to overlap with an inner side mounting surface of the mounting surface 22 when viewed from the normal direction of the main surface of the display section 13.

The mounting surface 23 is a surface for fixing the display section 13. That is, the display section 13 (panel 14) is attached to the mounting surface 23 of the fixing component 12 by using an adhesive component 29. The protruding portion 24 is arranged so as to cover a side wall of the display section 13 (panel 14). Note that, the adhesive components 28 and 29, for example, are adhesives, double-sided adhesive tapes, or the like.

The fixing component 12 is formed of a comparatively soft material; in other words, a material with a low rigidity. For example, the fixing component 12 can be formed of a resin material. In this case, the rigidity of the fixing component 12 is lower than the rigidity of the housing 11.

The display section 13 includes a panel 14 and a display panel 15. The panel 14 is a component for protecting the display panel 15 from an external environment. The panel 14 may be a touch panel. The touch panel can be configured by using a top panel made of glass material. The display panel 15 is attached to the panel 14 by using an adhesive, a double-sided adhesive tape, or the like. The display panel 15 is, for example, a liquid crystal panel, an organic EL (Electro Luminescence) panel, or the like.

The display section 13 (the panel 14) is fixed to the mounting surface 23 of the fixing component 12 by using the adhesive component 29 at an inner side of the protruding portion 24 of the fixing component 12. Since the panel 14 is required to protect the display panel 15 from an external environment, the panel 14 of the display section 13, for example, should be formed of a material that is transparent and has high rigidity (e.g., glass or the like). In this case, the rigidity of the fixing component 12 is lower than the rigidity of the display section 13 (the panel 14).

As explained above, in the portable terminal device according to this exemplary embodiment, the housing 11 and the display section 13 are configured by using the material with high rigidity. Therefore, it is possible to maintain the strength of the portable terminal device even when the thickness of the portable terminal device is reduced. Further, in the portable terminal device according to this exemplary embodiment, the fixing component 12 that has a lower rigidity than that of the housing 11 and the display section 13 is arranged between the housing 11 and the display section 13 that are configured by using the comparatively high-rigidity material. Therefore, in the case where an impact is exerted on the housing 11 when the portable terminal device is dropped, the impact can be absorbed by using the fixing component 12 that has the low rigidity. Thus, it is possible to prevent the impact exerted on the housing 11 from being transmitted to the display section 13. Similarly, in the case where an impact is exerted on the display section 13 when the portable terminal device is dropped, the impact can be absorbed by using the fixing component 12 that has the low rigidity. Thus, it is possible to prevent the impact exerted on the display section 13 from being transmitted to the housing 11. That is, the impact that is transmitted between the housing 11 and the display section 13 is absorbed by arranging the fixing component 12 that has the lower rigidity than that of the housing 11 and the display section 13 between the housing 11 and the display section 13.

In the portable terminal device 1 according to this exemplary embodiment, the fixing component 12 includes the protruding portion 24 that covers the side wall of the display section 13 (panel 14). That is, the fixing component 12 is arranged at the circumferential edge of the upper surface of the portable terminal device 1. Therefore, the fixing component 12 that is arranged at the circumferential edge of the upper surface of the portable terminal device 1 preferentially contacts the ground when the portable terminal device is dropped, and the impact is preferentially absorbed by using the fixing component 12. Specifically, when the portable terminal device is dropped, the impact can be absorbed by using the fixing component 12 before the impact is exerted on the housing 11. Therefore, it is possible to reduce the impact that is transmitted to the substrate 17 and the battery 18.

Accordingly, the invention according to this exemplary embodiment can provide a portable terminal device capable of achieving a reduction in the thickness and an improvement in the impact resistance of the portable terminal device. Note that, the advantageous effects of the present invention become much more pronounced when a size of the portable terminal device is comparatively large (e.g., equal to or more than 7 inches). As the portable terminal device becomes large, impact resistance of the portable terminal device is reduced. However, it is possible to improve the impact resistance of the portable terminal device by using this invention, even when the size of the portable terminal device becomes comparatively large.

Further, in the portable terminal device according to this exemplary embodiment, the housing 11 is configured by using a high-rigidity material. The frame component 16, to which the substrate 17 and the battery 18 are fixed, is fixed to the housing 11. Therefore, it is possible to suppress the plastic deformation of the frame component 16 owing to the restoring force of the housing 11 having a large strength. Further, the rigidity of the portable terminal device can be ensured owing to the part(s) where the housing 11 and the frame component 16 are joined together. Therefore, it is possible to maintain the strength of the portable terminal device even when the thickness of the housing 11 is reduced.

Further, since the substrate 17 and the battery 18 are attached to the housing 11 with the frame component 16 interposed therebetween, an impact that is transmitted from the housing 11 to the substrate 17 and the battery 18 when the portable terminal device is dropped can be reduced. More specifically, an impact that is exerted on the housing 11 when the portable terminal device is dropped is not directly transmitted to the substrate 17 and the battery 18. Instead, the impact is transmitted from the housing 11 to the frame component 16 and then from the frame component 16 to the substrate 17 and the battery 18. Therefore, the impact that is transmitted to the substrate 17 and the battery 18 can be reduced.

Further, in the portable terminal device according to this exemplary embodiment, the fixing component 12 is arranged between the housing 11 and the display section 13. Therefore, the alignment process can be easily performed when the display section 13 is fixed to the housing 11.

Next, other examples of the portable terminal device according to the exemplary embodiment are explained hereinafter.

As shown in Fig. 3, in the portable terminal device according to this exemplary embodiment, when the display section 13 is fixed to the mounting surface 23 of the fixing component 12, the display section 13 may also be fixed to the mounting surface 26 (a third mounting surface) of the frame component 16. In this case, the adhesive component 29 can be disposed from the mounting surface 23 of the fixing component 12 to the mounting surface 26 of the frame component 16, and the display section 13 can be fixed to the mounting surfaces 23 and 26.

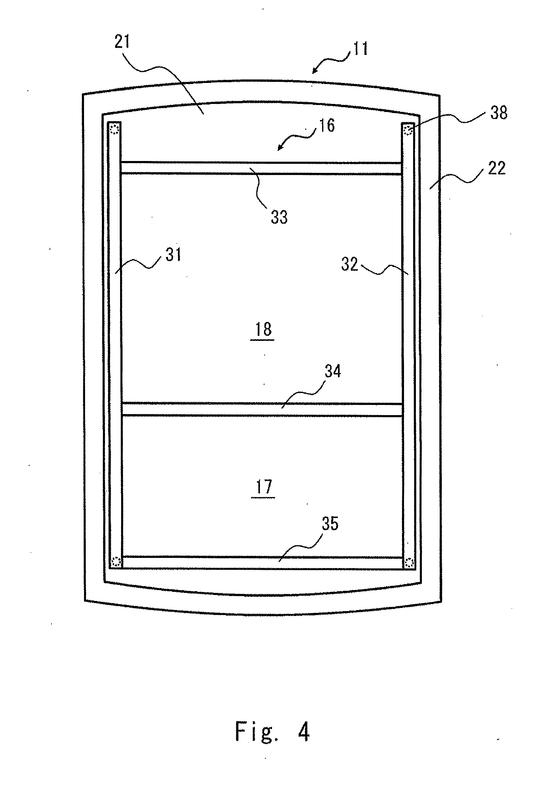

Fig. 4 is a top view showing a state where the frame component 16 is fixed to the housing 11 of the portable terminal device according to the exemplary embodiment. As shown in Fig. 4, the frame component 16, to which the substrate 17 and the battery 18 are fixed, is fixed to the fixing portions 38 that are arranged at the corners of the concave portion 21 of the housing 11 by using screws or the like. The frame component 16 includes the outer frames 31, 32, 35 and the beam members 33 and 34 that connect the outer frames 31 and 32. A thickness of the material configuring the outer frames 31, 32, 35, for example, is thicker than that of the material configuring the beam members 33 and 34 (refer to Fig. 3). The mounting surface 26 of the frame component 16 is formed at the top surface of the outer frames 31, 32, 35 so as to face the bottom surface of the display section 13.

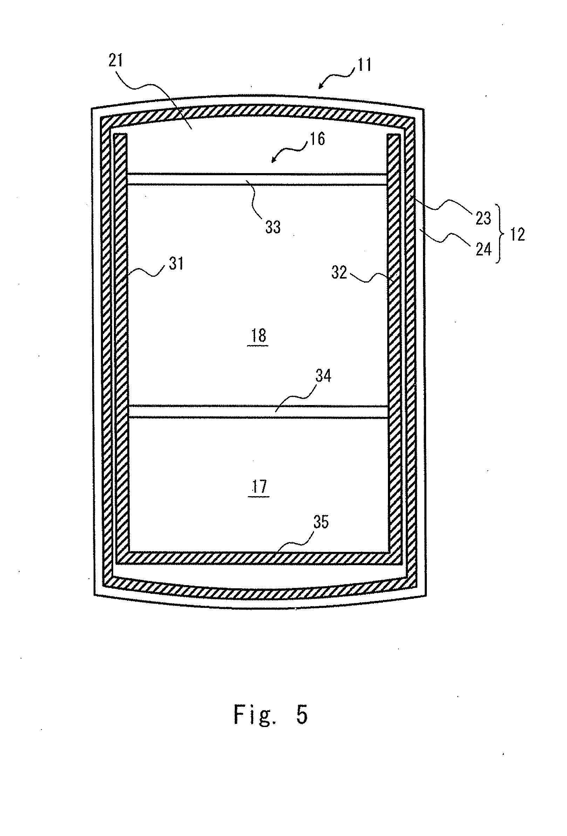

Fig. 5 is a top view showing a state where the frame component 16 and the fixing component 12 are fixed to the housing 11 of the portable terminal device according to the exemplary embodiment. As shown in Fig. 5, the mounting surface 23 of the fixing component 12 and the top surface of the outer frames 31, 32, 35 of the frame component 16 (each of which is shown in hatching) are areas to which the display section 13 is fixed.

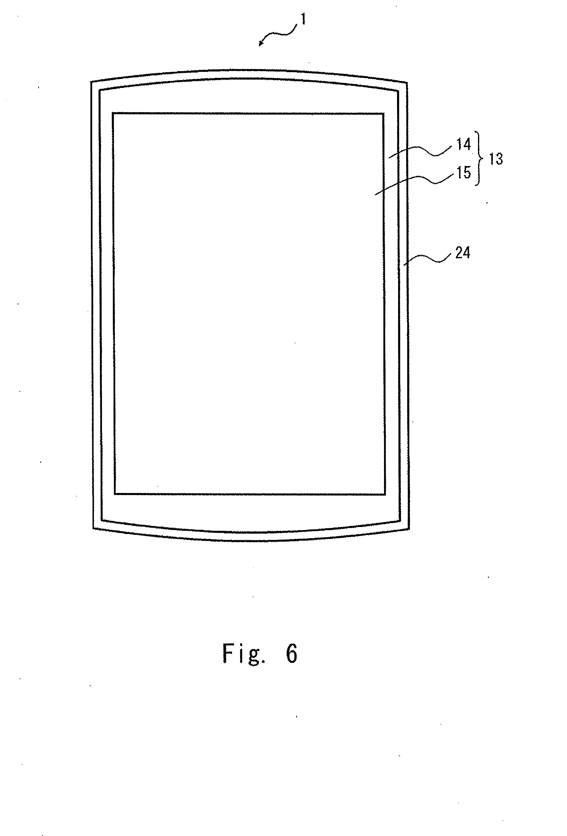

Fig. 6 is a top view showing a state where the display section 13 is fixed to the housing 11 of the portable terminal device according to the exemplary embodiment. The display section 13 is fixed to the mounting surface 23 of the fixing component 12 and the mounting surface 26 of the frame component 16 by using the adhesive component 29 at the inner side of the protruding portion 24 of the fixing component 12 (refer to Fig. 3). In this case, as shown in Fig. 6, the side wall of the display section 13 are covered by the protruding portion 24 of the fixing component 12. Further, as shown in Fig. 3, for example, the mounting surface 23 of the fixing component 12 and the mounting surface 26 of the frame component 16 are arranged so as to have approximately the same height in a normal direction of a main surface of the display section 13.

Although the present invention is explained above with reference to exemplary embodiments, the present invention is not limited to the above-described exemplary embodiments. Various modifications that can be understood by those skilled in the art can be made to the configuration and details of the present invention within the scope of the invention.

This application is based upon and claims the benefit of priority from Japanese patent application No. 2012-54246, filed on March 12, 2012, the disclosure of which is incorporated herein in its entirety by reference.

### Reference Signs List

1 PORTABLE TERMINAL DEVICE
11 HOUSING
12 FIXING COMPONENT
13 DISPLAY SECTION
14 PANEL (TOUCH PANEL)
15 DISPLAY PANEL
16 FRAME COMPONENT
17 SUBSTRATE
18 BATTERY
21 CONCAVE PORTION
22 MOUNTING SURFACE (FIRST MOUNTING SURFACE)
23 MOUNTING SURFACE (SECOND MOUNTING SURFACE)
24 PROTRUDING PORTION (FIRST PROTRUDING PORTION)
26 MOUNTING SURFACE (THIRD MOUNTING SURFACE)
27 BOTTOM SURFACE
28, 29 ADHESIVE COMPONENTS
31, 32, 35 OUTER FRAMES
33, 34 BEAM MEMBERS
38 FIXING PORTION

## Claims

1. A portable terminal device comprising:
a housing comprising a concave portion in which predetermined components are housed, and a first mounting surface that is disposed on a top surface of a side wall arranged around the concave portion;
a fixing component that is fixed to the first mounting surface of the housing and comprises a second mounting surface and a first protruding portion that is arranged around outside of the second mounting surface; and
a display section that is fixed to the second mounting surface at an inner side of the first protruding portion of the fixing component;
wherein a rigidity of the fixing component is lower than a rigidity of the housing and the display section.

2. The portable terminal device according to Claim 1, further comprising a frame component that is fixed to the housing and to which a substrate and a battery are fixed, wherein
an outer frame of the frame component comprises a third mounting surface that faces the display section, and
the display section is fixed to the second mounting surface of the fixing component and the third mounting surface of the frame component.

3. The portable terminal device according to Claim 2, wherein the display section is fixed to the second and third mounting surfaces by using an adhesive component that is disposed from the second mounting surface of the fixing component to the third mounting surface of the frame component.

4. The portable terminal device according to Claims 2 or 3, wherein the second mounting surface of the fixing component and the third mounting surface of the frame component are arranged so as to have approximately the same height in a normal direction of a main surface of the display section.

5. The portable terminal device according to any one of Claims 1 to 4, wherein the second mounting surface is arranged so as to be more close to the display section compared with the first mounting surface in a normal direction of a main surface of the display section.

6. The portable terminal device according to any one of Claims 1 to 5, wherein the second mounting surface is arranged so as to overlap with an inner side mounting surface of the first mounting surface when viewed from a normal direction of the main surface of the display section.

7. The portable terminal device according to any one of Claims 1 to 6, wherein
the housing is made of a material including carbon fibers,
the display section comprises a touch panel configured by using a top panel made of a glass material and a display panel attached to the touch panel, and
the fixing component is made of a resin material.
